# EUROPEAN PATENT APPLICATION

(11) **EP 4 834 713 A1**
(43) Date of publication of application: **04.11.2026**
(21) Application number: 25173294.7
(22) Date of filing: 29.04.2025
(51) Int. Cl.: B62D 5/00

(54) **STEERING CONTROL ARRANGEMENT WITH TORQUE SENSOR BETWEEN INPUT ASSEMBLY WITH ELECTRIC MOTOR FOR HAPTIC STEERING FEEDBACK AND STEERING ACTUATION CONVERTER, AND STEERING SYSTEM**

(71) Applicant: Danfoss Power Solutions ApS, 6430 Nordborg (DK)
(72) Inventor: Petersen, Morten Hoeck, 6430 Nordborg (DK); Bauer, Thomas, 6430 Nordborg (DK)
(74) Representative: Keil & Schaafhausen Patentanwälte PartGmbB

(57) **Abstract**

The invention relates to a steering control arrangement (1) for a steering system (90) for a vehicle (95), wherein the steering control arrangement (1) comprises an input assembly (2) for receiving operator-exerted torques (OET) for mechanic steering commands (MSC), an electric motor (6) that is mechanically coupled to the input assembly (2) for at least applying motor torques (MT) to the input assembly (2), and a steering actuation converter (10) for converting the mechanic steering commands (MSC) into mechanic, hydraulic, and/or electric actuation for the steering system (90). A mechanic control interface (11) of the steering actuation converter (10) is mechanically coupled with respect to the input assembly (2) to mechanically receive the mechanic steering commands (MSC). For allowing to reveal negative influences on the driving comfort and driving safety, a torque sensor (8) is arranged functionally between the electric motor (6) and the steering actuation converter (10). The invention further relates to steering system (90).

## Description

The invention relates a steering control arrangement for a steering system for a vehicle, wherein the steering control arrangement comprises an input assembly for receiving operator-exerted torques for mechanic steering commands, an electric motor that is mechanically coupled to the input assembly for (at least) applying motor torques to the input assembly, and a steering actuation converter for converting the mechanic steering commands into mechanic, hydraulic, and/or electric actuation for the steering system, wherein a mechanic control interface of the steering actuation converter is mechanically coupled with respect to the input assembly to mechanically receive the mechanic steering commands. The invention further relates to a steering system.

Various types of hydraulic steering systems for vehicles are known. A mechanic steering command finally results in a change of a wheel direction angle of one or more steerable wheels of the vehicle with respect to a longitudinal axis of the vehicle, thereby changing a direction of movement of the vehicle.

Some hydraulic steering systems employ electrohydraulic valves (e.g. fail-safe electrohydraulic steering systems with emergency braking, hybrid steering systems employing a traditional hydraulic steering unit with at least one metering pump and an electrohydraulic valve assembly, and steer-by-wire systems employing redundant electrohydraulic valves).

An exemplary hydraulic steering system is, for example, shown in Figure 1 of DE 10 2007 053 024 A1. Some modifications are described in EP 2 762 387 A1. The hydraulic steering system comprises a (traditional) hydraulic steering unit with a metering pump and additionally an electrohydraulic valve assembly that allows for electronically controlled hydraulic steering (electrohydraulic steering). A steering cylinder can be actuated by the electronic valve assembly and by the hydraulic steering unit.

In a steering system, an input assembly that is operable by an operator to input mechanic steering commands by exerting operator-exerted torques is typically provided. Often, the input assembly includes a steering wheel that is used for receiving operator-exerted torques from the operator. The operator can mechanically operate the steering wheel for changing a direction of movement of the vehicle. Further, the input assembly has a steering column with a steering shaft. The steering shaft is mechanically rotationally coupled to the steering wheel and forwards the mechanic steering commands (corresponding to the operator-exerted torques) from the steering wheel to a mechanic control interface of a steering actuation converter. The steering actuation converter then "converts" the mechanic steering commands into mechanic, hydraulic, and/or electric actuation for the steering system. In the hydraulic steering system shown in Figure 1 of DE 10 2007 053 024 A1 and in EP 2 762 387 A1, the steering actuation converter is the traditional hydraulic steering unit, especially the metering pump, for converting the mechanic steering commands into hydraulic actuation for a steering cylinder. The metering pump is mechanically rotationally coupled to the mechanic control interface and hence also to the steering shaft and the steering wheel.

Without further measures, a traditional hydraulic steering system does not provide a restoring torque to the steering wheel for bringing back the steering wheel back into a neutral position corresponding to the wheel direction angle being neutral (which may be defined as being zero). No haptic steering feedback is given to the operator.

In order to provide haptic steering feedback to the operator, an electric motor can be mechanically coupled to the steering shaft. The electric motor can apply motor torques to the steering shaft and hence to the steering wheel. In particular, a restoring torque for restoring the steering wheel back to the neutral position, similar as in a rack and pinion steering, can be generated.

As noted above, the mechanic control interface of the steering actuation converter is also mechanically coupled to the steering shaft. Hence, the steering actuation converter can exert torque disturbances to the steering shaft. The torques disturbances can, for example, include inertia, counter torques, and any other torques, influences on, and/or resistances with respect to rotation of the mechanic control interface and hence with respect to rotation of the steering shaft with the steering wheel. The disturbances can result from said inertia, friction, hydraulic effects, and/or the like. For example, a part of the motor torques might be "consumed" by friction of mechanic elements coupled to the mechanic control interface of the steering actuation converter.

Typically, the motor torques correspond to a desired haptic steering feedback that shall be provided to the operator at the steering wheel. Due to the additional torque disturbances, the actual torque experienced by the operator at the steering wheel (an actual haptic steering feedback) does not accurately match to the desired haptic steering feedback. The actual haptic steering feedback results from the combination of the motor torques and the torque disturbances. Hence, the actual torque experienced can be irregular, unpredictable, and/or fluttering due to the torque disturbances. This impairs the driving pleasure and the driving comfort for the operator. It can even surprise and confuse the operator and hence impair the driving safety.

The object underlying the invention is to allow to reveal negative influences on the driving comfort and driving safety in steering systems with electric motor for providing haptic steering feedback.

This problem is solved by a steering control arrangement with the features according to claim 1.

The steering control arrangement is for a steering system for a vehicle.

The steering control arrangement comprises:
an input assembly (a steering input assembly) for receiving operator-exerted torques for mechanic steering commands;
an electric motor that is mechanically coupled to the input assembly for (at least) applying motor torques to the input assembly; and
a steering actuation converter for converting the mechanic steering commands into mechanic, hydraulic, and/or electric actuation for the steering system, wherein a mechanic control interface of the steering actuation converter is mechanically coupled with respect to the input assembly to mechanically receive the mechanic steering commands.

A torque sensor is arranged functionally between the electric motor and the steering actuation converter.

The torque sensor is configured to detect torque disturbances exerted by the steering actuation converter with respect to the input assembly with the electric motor. The torque sensor can be used to measure the torque disturbances. This allows to reveal negative influences on the driving comfort and the driving safety in the steering system with the electric motor for providing haptic steering feedback. The torque sensor can be configured to provide information on the torque disturbances. The information on the torque disturbances can be used to compensate, at least partly, for the torque disturbances. Especially, this can be done by adapting the motor torque in order to compensate, at least partly, for the torque disturbances to match an actual haptic steering feedback at the input assembly better to a desired haptic steering feedback.

According to one aspect, the input assembly can include a steering shaft.

A rotor of the electric motor may be (e.g. directly) mechanically coupled to the steering shaft for (at least) applying the motor torques to the steering shaft.

Additionally or alternatively, the rotor of the electric motor forms part of the steering shaft. This allows for a particularly small size of the input assembly.

The steering control arrangement can include a steering wheel. The steering wheel can be (e.g. directly) rotationally coupled to the steering shaft.

In one embodiment, the steering shaft and the mechanic control interface of the steering actuation converter are directly mechanically rotationally coupled. This ensures a proper and precise forwarding of the mechanic steering commands and allows for small installation space.

The steering control arrangement can include a steering column. The steering column may include at least a part of the steering shaft.

The electric motor may form part of the input assembly, e.g. form part of the steering column. Additionally or alternatively, the electric motor may form part of the steering actuation converter. Corresponding integral units can be provided. This can be beneficial for small size and for robustness.

The mechanic control interface of the steering actuation converter can receive the mechanic steering commands from the input assembly. The input assembly may mechanically transmit/forward the mechanic steering commands from the operator to the mechanic control interface.

According to one aspect, the steering control arrangement is capable of producing haptic steering feedback for an operator with applying the motor torques to the input assembly. As noted above, the steering control arrangement uses the electric motor to generate/apply the motor torques.

The electric motor can be operable for actively moving the input assembly (e.g. for rotating the steering shaft and/or the steering wheel). The steering control arrangement can be used to automatically return, at least under certain circumstances, the input assembly to a neutral position corresponding to a neutral wheel direction angle of at least one steerable wheel by applying the motor torques with the electric motor. The corresponding motor torques can be referred to as "restoring torques" and can form part of the haptic steering feedback.

The neutral wheel direction angle can correspond to a movement direction of the vehicle parallel to a longitudinal axis of the vehicle and/or to straight-forward movement of the vehicle.

The torque sensor may be configured to detect relative torques between the mechanic control interface of the steering actuation converter and the input assembly being drivable by the electric motor. This torque sensor is arranged functionally between the electric motor and the steering actuation converter and not arranged functionally between the electric motor and the steering wheel. In other words, this torque sensor is arranged at a "converter-side" with respect to the electric motor (but not on an "operator-side" with respect to the electric motor).

As an example, the following situation is assumed: The steerable wheel(s) are deflected away from the neutral wheel direction angle and the vehicle is moving with a certain vehicle speed. A desired haptic steering feedback consisting of a desired restoring torque for rotating the steering wheel back to a neutral position (corresponding to the neutral wheel direction angle) shall act on the steering wheel. According to a first step, the motor torques to be applied by the electric motor are set to the desired haptic steering feedback (i.e. the desired restoring torque). However, the steering actuation converter exerts torque disturbances, for example a resistance against the mechanic control interface following the movement (rotation) of input assembly (e.g. due to inertia, friction, and/or the like). A relative torque representing this torque disturbance/resistance occurs between parts of the steering shaft at a side with the electric motor and the steering wheel on the one hand and the mechanic control interface of the steering actuation converter on the other hand. The torque sensor detects this relative torque. Accordingly, it can provide information on the torque disturbances.

According to one aspect, the steering control arrangement can comprise a controller for controlling the electric motor, wherein the controller is operatively connected with the torque sensor and configured to use information from the torque sensor for controlling the motor torques applied by the electric motor. In the example as described in the preceding paragraph, the controller can use the information on the torque disturbances to adjust the motor torque such that the adjusted motor torque (at least partly) compensates for the torque disturbances. The actual haptic steering feedback (i.e. the actual restoring torque that acts on the steering wheel) can thus match better to the desired haptic steering feedback (i.e. the desired restoring torque). For example, the controller can increase the motor torque until the actual haptic steering feedback (motor torque minus the torque disturbance) matches the desired haptic steering feedback.

Accordingly, in one embodiment, the steering control arrangement, especially the controller, is configured to use the information from the torque sensor to compensate, at least partly, for said relative torques (i.e. the torque disturbances) in controlling the motor torques for providing the (desired) haptic steering feedback.

The controller may be configured to perform a closed-loop control to compensate, at least party, for said relative torques (i.e. the toque disturbances) in controlling the motor torques for providing the haptic steering feedback.

According to one aspect, the steering control arrangement (especially the controller) may be configured to provide, (at least under certain circumstances) in active steering, a damping torque with the electric motor. "Active steering" may mean (include situations) when the operator actively mechanically operates the input assembly for increasing the wheel direction angle of the at least one steerable wheel away from a neutral wheel direction angle. The damping torque provides an additional resistance (damping) against increasing the wheel direction angle of the steerable wheel(s) away from a neutral position, i.e. against moving the input assembly (e.g. the steering wheel) (further) away from its neutral position.

In one embodiment, the controller is configured to receive vehicle speed information and to determine the motor torque considering the vehicle speed information. The controller can include an interface for receiving the vehicle speed information, e.g. a hardware interface and/or a software interface. For example, a strength of the restoring torque and/or a strength of the damping torque may increase with increasing vehicle speed.

Additionally or alternatively, the controller can be configured to receive wheel direction angle information and to determine the motor torques considering the wheel direction angle information. The controller can include an interface for receiving the wheel direction angle information, e.g. a hardware interface and/or a software interface. For example, the strength of the restoring torque and/or the strength of the damping torque may increase with increasing wheel direction angle.

The controller may be configured to receive mechanic steering input information and to determine the motor torques considering the mechanic steering input information. The controller can include an interface for receiving the steering input information, e.g. a hardware interface and/or a software interface. The steering information may include information on (e.g. rotational) positions of the input assembly and/or on (e.g. rotational) movement speeds of the input assembly, for example, information on rotational positions and/or rotational movement speeds of at least one of the steering wheel and the steering shaft.

In general, the mechanic steering commands can be exerted by the operator and/or by the electric motor. Depending on the circumstances, the electric motor may be inactive, may exert motor torques working against operator-exerted torques/mechanic steering commands applied by the operator, may exert motor torques supporting the operator-exerted torques/mechanic steering commands applied by the operator, or may exert motor torques while the operator does not apply operator-exerted torques/mechanic steering commands (e.g. in the case of restoring torques being exerted while the operator has taken the hands off the steering wheel).

According to one aspect, the mechanic steering commands may correspond to the combination of the operator-exerted torques and the motor torques.

The torque sensor can be arranged anywhere functionally between the electric motor (especially the rotor thereof) and the steering actuation converter.

The term "functionally arranged between the electric motor and the steering actuation converter" may imply that the torque sensor is arranged such that both the motor torques applied by the electric motor and operator-exerted torques (the complete mechanic steering commands) must pass the torque sensor to act in the steering actuation converter.

This includes that the torque sensor can be arranged at the mechanic control interface of the steering actuation converter. As an example, the torque sensor might be implemented at a spline joint between the steering shaft and the mechanic control interface.

The steering shaft may include the torque sensor. The torque sensor can form part of the steering shaft. For example, the torque sensor can couple two adjacent parts of the steering shaft. It is reminded that the rotor of the electric motor can form a part of the steering shaft. In one embodiment, the torque sensor can mechanically couple the rotor with a part of the steering shaft facing towards the mechanic control interface.

The steering actuation converter can include a hydraulic steering unit. The hydraulic steering unit may include at least one of a metering pump and an electrohydraulic valve assembly. The steering actuation convert can be configured for converting the mechanic steering commands into hydraulic actuation for the steering system, especially in hydraulic actuation for at least one steering cylinder.

In one embodiment, the steering actuation converter includes a metering pump that is mechanically rotationally coupled to the mechanic control interface. The steering control arrangement may allow for emergency steering with manual pumping of hydraulic fluid with the metering pump by operating the steering wheel. This provides redundancy, e.g. if a pump of a hydraulic fluid supply fails.

The steering control arrangement can be configured to detect the resistance exerted by the metering pump against manual pumping (i.e. against being rotated) with the torque sensor. The steering control arrangement (especially the controller) can be configured for using the electric motor in order to supply motor torques to support the operator in turning the steering wheel.

The steering control arrangement can comprise a steering input sensor for providing the steering input information. The steering input sensor can include a position sensor, a movement speed sensor, and/or an input torque sensor.

The input torque sensor may be functionally arranged between the steering wheel and the electric motor.

The input torque sensor can detect relative torques between an operator-side end of the input assembly (e.g. the steering wheel) and a part of the input assembly with the electric motor (referred to as relative input torques). It can provide input torque information that is indicative of said relative torques. The input torque information is indicative of whether
- the motor torques are acting opposite to the operator-exerted torques,
- the motor torques are acting in the same direction as the operator-exerted torques,
- there are nor operator-exerted torques (the relative input torque is zero / insignificant).

Despite of whether the input torque sensor forms part of the steering control arrangement as such or not, the controller can be configured to receive the input torque information and to determine the motor torques considering the mechanic steering input information. The controller may include an interface for receiving the input torque information, e.g. a hardware interface and/or a software interface.

The problem mentioned above is further solved by a torque sensor comprising at least one pressure sensing element that is arranged within a spline joint. The torque sensor according to the invention can be referred to as "spline joint torque sensor". The spline joint torque sensor is an independent aspect of the invention.

The spline joint torque sensor allows for a space-saving implementation of the torque sensor. Further, it ensures high operational safety. Even if the pressure sensing element collapses, e.g. due to over-torques, the spline joint will be still functional. The collapse of the pressure sensing element only might lead to a slightly increased play within the spline joint.

The at least one pressure sensing element may include a piezoelectric element.

The spline joint may include a first joint member with outer splines and a second joint member with inner splines. The first joint member and the second joint member may be mechanically rotationally coupled by engagement of the inner splines and the outer splines.

The spline joint torque sensor allows for torque measurement without significant deadband. The compression of the pressure sensing element can change significantly with a minimum relative rotational displacement between the first joint member and the second joint member, e.g. below 0,5°, maybe below 0,2°.

The spline joint torque sensor may provide torque measurement without deadband. For example, this can be achieved in that the spline joint is assembled such the pressure sensing element is already pre-compressed when no torques are transferred by the spline joint.

The first joint member and the second joint member may be rotatable about a common rotational axis.

The first joint member can include a radially inner joint portion, e.g. a central shaft portion, with outer splines. Additionally or alternatively, the second joint member can include a radially outer joint portion, e.g. an outer sleeve portion, with the inner splines.

The outer sleeve portion and/or the inner joint portion may be considered forming part of the spline joint torque sensor. The spline joint may be considered forming part of the spline joint torque sensor. In other words, the invention is also related to a spline joint with integrated spline joint torque sensor.

The outer splines can include outer spline interface surfaces that are inclined with respect to a local circumferential direction, for example e.g. with an angle of at least 20°, for example with an angle of at least 70°. The outer spline interface surfaces can be (at least substantially) perpendicular to the local circumferential direction.

The inner splines can include inner spline interface surfaces that are inclined with respect to the local circumferential direction, for example e.g. with an angle of at least 20°, for example with an angle of at least 70°. The inner spline interface surfaces can be (at least substantially) perpendicular to the local circumferential direction.

The spline joint may be configured that the inner spline interface surfaces can abut and engage the outer spline interface surfaces for transferring a rotational movement of the first joint member to the second joint member, and/or vice versa.

For example, the at least one pressure sensing element can be arranged between one of the inner spline interface surfaces and the adjacent outer spline interface surface. The at least one pressure sensing element can be fixed to this inner spline interface and/or to this outer spline interface surface.

A compression of the at least one pressure sensing element may increase with increasing torque transfer from the first joint member to the second joint member along a first relative rotational direction. Increasing torque transfer from the first joint member to the second joint member might lead to an increasing small relative rotational displacement of the first joint member to the second joint member along the first relative rotational direction. By the way, this corresponds to the compression of the at least one pressure sensing element increasing with increasing torque transfer from the second joint member to the first joint member along a second relative rotational direction opposite to the first relative rotational direction (actio = reactio).

In one embodiment, the torque sensor comprises a second pressure sensing element (i.e. at least one further pressure sensing element). The second pressure sensing element is also arranged within the spline joint.

The at least one of, several of, or all of the pressures sensing elements may include (or consist of) a piezo-electric element, respectively.

The compression of the second pressure sensing element may increase with increasing torque transfer from the first joint member to the second joint member along the second relative rotational direction. Naturally, this corresponds to the compression of the second pressure sensing element increasing with increasing torque transfer from the second joint member to the first joint member along the first relative rotational direction. Accordingly, relative torques / torque transfer with respect to both rotational directions can be measured with high accuracy.

The spline joint torque sensor according to the invention can be implemented as "the torque sensor" of the steering control arrangement of the present invention. In other words, "the torque sensor" of the steering control sensor according to the invention can be the spline joint torque sensor according to any embodiment described herein.

The embodiments, modifications, and advantages described with regard to the spline joint torque sensor may apply accordingly to the steering control arrangement, and vice versa.

Especially, the torque sensor of the steering control arrangement may comprise at least one pressure sensing element that is arranged within a spline joint. The spline joint may form part of the steering control arrangement.

Said at least one pressure sensing element may include a piezoelectric element.

According to one aspect, the spline joint torque sensor may be arranged in a spline joint between two parts of a steering shaft, between a part of a steering shaft and a mechanic control interface of a steering actuation converter, between a steering wheel and a steering shaft, or between an electric motor and the steering shaft. If a rotor of the electric motor forms part of the steering shaft, the torque sensor may be arranged in a spline joint between the rotor shaft and another part of the steering shaft.

The spline joint torque sensor according to the invention can be implemented as "the input torque sensor" of the steering control arrangement of the present invention.

The problem indicated above is further solved by a steering system for a vehicle. The steering system may include the steering control arrangement according to the invention and/or at least one spline joint torque sensor according to the present invention.

The embodiments, modifications, and advantages described with respect to any one of the steering control arrangement and the spline joint torque sensor may apply accordingly with respect to the steering system, and vice versa.

In one embodiment, the steering system is a hydraulic steering system. It can comprise at least one (hydraulic) steering cylinder that is hydraulically coupled to the steering actuation converter. The steering actuation converter can include a hydraulic steering unit for hydraulically operation the at least one steering cylinder.

The hydraulic steering unit may comprise at least one metering pump, which can be rotationally coupled to the mechanic control interface of the steering actuation converter. Additionally or alternatively, the hydraulic steering unit may comprise at least one electrohydraulic valve assembly.

The steering system may provide hydrostatic steering.

As noted above, the steering control arrangement (and hence the steering system) can comprise the motor controller for controlling the electric motor.

The steering control arrangement can comprise a vehicle speed sensor for providing the vehicle speed information. The motor controller, especially the input for receiving the vehicle speed information, may be connected to the vehicle speed sensor.

Additionally or alternatively, the steering control arrangement can comprise a wheel direction angle sensor for providing wheel direction angle information (of the at least one steerable wheel). The motor controller, especially the input for receiving the wheel direction angle information, may be connected to the wheel direction angle sensor.

The vehicle can be, for example, an agricultural vehicle (e.g. a tractor, a harvester, or a cherry picker), a building-site vehicle (e.g. a bulldozer, an excavator, a backhoe, or an asphalt paver), a self-propelled working machine (e.g. a sweeper vehicle) or industrial machine, a heavy-duty machine (e.g. a truck), a utility machine (e.g. a forklift, a crane, or a telehandler), an off-highway vehicle, an all-terrain vehicle, a marine vehicle, or the like.

The invention is also directed to a vehicle with such the steering system.

Further, the invention is directed to a method for operating a steering system, wherein the method includes
- measuring torque disturbances exerted from at least one mechanic element of a steering system that is mechanically coupled to and entrained by an input assembly (a steering input assembly) with an electric motor for providing haptic feedback, and
- applying, with the electric motor, motor torques to the input assembly for providing a haptic steering feedback, and
- determining the motor torques including compensating for the measured torque disturbances.

The embodiments, modifications, and advantages described with respect to any one of the steering command system, the torque sensor, the steering system, and the vehicle may apply accordingly with respect to the method, and vice versa.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: schematically shows a vehicle with a steering system including a steering control arrangement according to the invention, wherein a torque sensor is arranged functionally between an electric motor coupled with a steering shaft one the one hand and a steering actuation converter in the form of a hydraulic steering unit on the other hand;
- Fig. 2: schematically shows a control approach for operating an electric motor in a steering control arrangement, e.g. as in Fig. 1;
- Fig. 3: schematically shows a cross-sectional view of a spline joint with a spline joint torque sensor that can be implemented, for example, as the torque sensor in Fig. 1 and Fig. 2.; and
- Fig. 4: schematically shows the disassembled spline joint of Fig. 3 in a perspective view.

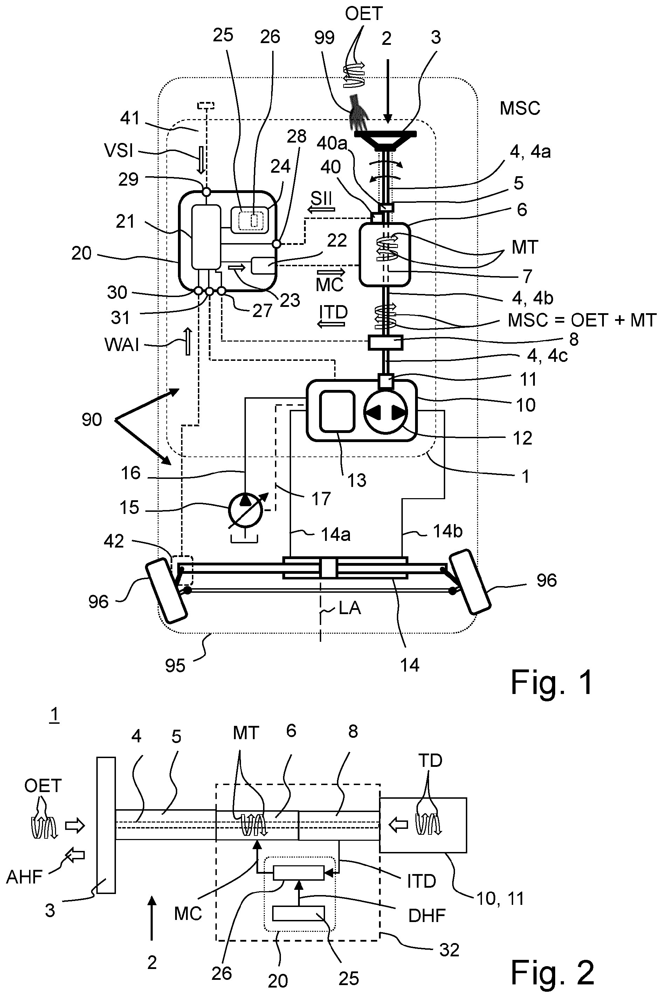

Fig. 1 shows a vehicle 95 with two steerable wheels 96. A wheel direction angle of the steerable wheels 96 with respect to a longitudinal axis LA of the vehicle 95 can be changed via a steering system 90.

The steering system 90 comprises a steering control arrangement 1. The steering control arrangement 1 allows an operator 99 to operate the steering system 1 and hence to steer the vehicle 95.

The steering control arrangement 1 comprises a steering input assembly 2 (briefly referred to as input assembly 2). The input assembly 2 includes a steering input device, e.g. in form of a steering wheel 3 as shown. An operator 99 can input mechanic steering commands MSC for changing the wheel direction angle using the steering input device (i.e. the steering wheel 3). For this, the operator 99 exerts torques to the steering wheel 3 (the operator-exerted torques). Especially, the operator 99 can turn the steering wheel 3 in two opposite movement directions thereof, namely leftward and rightward. Turning the steering wheel 3 leftward may correspond, seen from the perspective of the operator 99, to a counterclockwise rotation of the steering wheel 3. Leftward rotation of the steering wheel 3 may correspond to a leftward mechanic steering command MSC. Turning the steering wheel 3 rightward may correspond, seen from the perspective of the operator 99, to a clockwise rotation of the steering wheel 3. Rightward rotation of the steering wheel 3 may correspond to a rightward mechanic steering command MSC.

The input assembly 2 includes a steering shaft 4 that is at least partly arranged in a steering column 5. The steering wheel 3 is mechanically rotationally coupled to the steering shaft 4.

An electric motor 6 is mechanically coupled to the steering shaft 4 and hence - via the steering shaft 4 - to the steering wheel 3. More precisely, the steering wheel 3 is mechanically coupled to a first end of the steering shaft 4. The electric motor 6 can apply motor torques MT onto the steering shaft 4 and hence to the steering wheel 3. The motor torques MT can rotate the steering shaft 4 and hence the steering wheel 3.

It is noted that a rotor 7 of the electric motor 6 can form part of the steering shaft 4.

A mechanic control interface 11 of a steering actuation converter 10 is mechanically rotationally coupled to the steering shaft 4, more precisely to a second end of the steering shaft 4 that is opposite to the first end. In other words, the steering actuation converter 10, namely the mechanic control interface 11 thereof, is coupled to an end of the steering shaft 4 facing away from the steering wheel 3.

The electric motor 6 is mechanically coupled to the steering shaft 4 (and/or integrated into the steering shaft 4) between the first end with the steering wheel 3 and the mechanic control interface 11.

The steering control arrangement 1 comprises a torque sensor 8 that is arranged between the electric motor 6 and the mechanic control interface 11.

Just as an example, in Fig. 1, the torque sensor 8 forms part of the steering shaft 4 at a location between the electric motor 6 and the second end of the steering shaft 4, in more detail between two parts 4b and 4c of the steering shaft 4 that are arranged between the electric motor 6 and the mechanic control interface 11.

A possible modification (not shown) is to arrange the torque sensor 8 between the rotor 7 of the electric motor 6 and the part(s) of the steering shaft 4 with the second end. Still a further exemplary possible modification is to arrange the torque sensor 8 between the steering shaft 4 and the mechanic control interface 11.

The torque sensor 8 detects relative torques between an "operator-side" part of the steering shaft 4 and the mechanic control interface 11. It is hence indicative of "torque disturbances" TD (schematically shown in Fig. 2) exerted via the steering actuation converter 10 to the input assembly 2. The relatives torques can be equivalent to torque portions that are consumed or additionally exerted at the side of the steering actuation converter 10 with respect to the combination of the motor torques MT and the operator-exerted torques OET. The torque disturbance TD are explained below in more detail. The torque sensor 8 provides information on the torque disturbances ITD.

The operator-side part of the steering shaft 4 is directly rotationally coupled to the steering wheel 3. It is directly rotationally driven by the rotor 7 of the electric motor 6 or even includes the rotor 7. In Fig. 1, the operator-side of the steering shaft 4 is anything of the steering shaft 4 above the torque sensor 8, i.e. the part 4b, the rotor 7 of the electric motor 6, and an (operator-side) end part 4a of the steering shaft 4 including the first end of the steering shaft 4 with the steering wheel 3 being attached thereto. In other words, the operator-side of the steering shaft 4 may include all parts of the steering shaft 4 at a side of the torque sensor 8 opposite to the steering actuation converter 10. Since the torque sensor 8 is arranged between the parts 4b and 4c of the steering shaft 4 in Fig. 1, the steering shaft 4 also includes a "converter-side" with respect to the torque sensor 8, namely the part 4c. However, as noted above, the torque sensor 8 could be arranged between the second end of the steering shaft 4 and the steering actuation converter 10 such that there is no "converter-side" of the steering shaft 4 with respect to the torque sensor 8.

The torque sensor 8 is arranged such that motor torques MT applied by the electric motor MT and the operator-exerted torques OET (all mechanical steering commands MSC) must be forwarded through the torque sensor 8 to act in the steering actuation converter 10.

In this example, the steering system 90 is a hydraulic steering system. The steering actuation converter 10 is implemented in the form of a hydraulic steering unit. The hydraulic steering unit allows for hydrostatic steering. It comprises a metering pump 12 and/or an electrohydraulic valve assembly 13. The metering pump 12 is mechanically rotationally coupled to the mechanic control interface 11 and hence to the steering shaft 4 with the rotor 7 of the electric motor 6 and the steering wheel 3.

The torque sensor 8 could be built into the electric motor 6. The torque sensor 8 could be built into the steering actuation converter 10. It is possible to have (at least) two torque sensors 8, e.g. for redundance.

The vehicle 95 has a steering cylinder 14 that is hydraulically coupled to the steering actuation converter 10 (the hydraulic steering unit) via fluid connections 14a, 14b. The steering cylinder 14 and/or the fluid connections 14a, 14b can form part of the steering system 90.

The steerable wheels 96 are operatively connected to the hydraulic steering cylinder 14.

In this embodiment, the steering actuation converter 10 (the hydraulic steering unit) converts the mechanic steering commands MSC into hydraulic actuation for the steering cylinder 14.

A hydraulic supply unit 15 supplies pressurized hydraulic fluid to the steering actuation converter 10. The hydraulic supply unit 15 is fluidly connected to the steering actuation converter 10 with a fluid supply line 16 and a fluid return line 17. The hydraulic supply unit 15 is part of the vehicle 95. It can form part of the steering system 90 as such. It may include at least one fluid pump.

The steering control arrangement 1 comprises a motor controller 20. The motor controller 20 drives the electric motor 6. It supplies electric motor currents MC to the electric motor 6. The electric motor currents MC determine the motor torques MT that are generated by the electric motor 6 and are indicative of/equivalent to the motor torques MT.

Optionally, the motor controller 20 can be integrated in the electric motor 6 or into the steering actuation converter 10.

In the exemplary embodiment, the motor controller 20 includes a processor 21 and a current output unit 22 that is in data connection with the processor 21. The current output unit 22 is configured for supplying the electric motor currents MC for the electric motor 6 in accordance with control data 23. The control data 23 is indicative of the electric motor currents MC to be applied and hence also motor torques MT to be applied. The control data 23 may be generated by the processor 21 as shown in Fig. 1.

The motor controller 20 "knows" the motor torques MT, e.g. at least based on the control data 23 and/or the electric motor currents MC. The control data 23, the electric motor currents MC, and the motor torques MT can be considered equivalent. The motor controller 20 can include means for measuring the electric motor currents MC. This can be used for checking whether the actual electric motor currents MC are in accordance with the control data 23. Of course, the means for measuring the elector motor currents MC can be implemented as a discrete sensor connected to the motor controller 20 as well.

The motor controller 20 can further comprise a memory 24 that is in data connection with the processor 21.

The motor controller 20 can include (be configured to perform) a torque determining functionality. The torque determining functionality determines at least one of the control data 23, the electric motor currents MC, and the motor torques MT.

The steering control arrangement 1 may comprise a computer-readable medium storing code for implementing/performing the torque determining functionality. Instructions 25 for performing the torque determining functionality can be stored, especially pre-stored in the memory 24. The instructions 25 may include (consist of) corresponding code/algorithms. The instructions 25 can include or correspond to a "torque model" for calculating the control data 23, the electric motor currents MC, and/or the motor torques MT.

The motor controller 20 has an interface 27 for receiving the information on the torque disturbances ITD. The purpose will be explained below.

The motor controller 20 can include an interface 28 for receiving steering input information SII. The steering input information SII is indicative of one of, several of, or all of the following:
- (rotational) positions of the steering wheel 3,
- (rotational) movement speeds of the steering wheel 3, and
- relative torques between the steering wheel 3 and (the rotor 7 of) the electric motor.

According to another aspect, the motor controller 20 can include an interface 29 for receiving vehicle speed information VSI. The vehicle speed information VSI is indicative of a speed of the vehicle 95 (a vehicle speed). The steering system 90 (or even the steering control arrangement 1 as such) can have a vehicle speed sensor 41 for providing the vehicle speed information VSI.

Further, the motor controller 20 can include an interface 30 for receiving wheel direction angle information WAI. The wheel direction angle information WAI is indicative of the wheel direction angle of at least one of the steerable wheels 96. The steering system 90 (maybe even the steering control arrangement 1 as such) can include a wheel direction angle sensor 42 for providing the wheel direction angle information WAI.

According to another aspect, the motor controller 20 can have an output 31 for outputting actuation control data for the steering actuation converter 10. For example, the motor controller 20 might be also configured to operate the electrohydraulic valve assembly 13 based at least on the steering input data SII. The motor controller 20 might also consider the wheel direction angle data WAI, the vehicle speed data VSI, and/or the information on the torque disturbances ITD for controlling the electrohydraulic valve assembly 13.

The interfaces 28, 29, 30, 31 can be hardware interfaces and/or software interfaces, respectively. Hardware interfaces may be connected with the processor 21.

As noted above, the motor controller 20 performs the torque determination functionality for determining the motor torques MT that are applied by the electric motor 6 to the steering wheel 3 (via the steering shaft 4). The torque determination functionality may be configured to use one of, several of, or all of the steering input information SII, the vehicle speed information VSI, the wheel direction angle information WAI, and the information on the torque disturbances ITD as input.

For example, the torque determination functionality may be configured to determine at least a restoring torque. The restoring torque serves for self-centering of the steering system 90 towards the neutral wheel direction angle (and for providing corresponding haptic steering feedback to the steering wheel 3). The restoring torques try to rotate back the steering wheel 3 to a corresponding neutral position thereof. The restoring torques may become stronger with increasing deviation of the wheel direction angle from the neutral wheel direction angle, i.e. with increasing absolute value of the wheel direction angle since the neutral wheel direction angle can be defined as zero. Additionally or alternatively, it may become stronger with increasing vehicle speed.

Reaction steering may mean (include situations) when the operator 99 does not operate the input assembly 2 (especially the steering wheel 3). Reaction steering might also include situations when the operator 99 holds the steering wheel 3 without increasing the wheel direction angle of the steerable wheel 96 away from the neutral wheel direction angle and/or situations when the operator 99 slows down a restoring movement of the steering wheel 3 towards its neutral position (caused by the motor torques MT in form of/including the restoring torques).

Usually, the motor torques MT applied by the electric in reaction steering include (consist of) the reaction torques.

However, the steering actuation converter 10, for example the metering pump 12 can exert torque disturbances TD to the steering shaft 4. The torque disturbances TD can include resistances against the mechanic control interface 11 being rotated, e.g. due to friction within the steering actuation converter 10. They can result at least partly from inertia of any components of the steering actuation converter 10 that are moved by rotation of mechanic control interface 11. The steering actuation converter 10 may include at least one further component, e.g. the metering pump 12, that is moved (e.g. rotated) by rotation of the mechanic control interface 11. Additionally or alternatively, torque disturbances TD can result from hydraulic effects.

In general, the torque disturbances TD can be of any origin. The torque disturbances TD may be not predictable (at least not completely). Further, the torque disturbances TD can vary for different embodiments of the steering system 90 and/or for different operational conditions. The torque disturbances TD can be referred to as "torque noise".

In general, the steering actuation converter 10 can be any element of a steering system that is mechanically entrained by the steering shaft 4 with the mechanic steering commands MSC, in each of the cases that they result from operator-exerted torques OET (see Fig. 2), from the motor torques MT, and from both the operator-exerted torques OET and the motor torques MT, and that can exert torque disturbances TD with respect to the mechanic steering commands MSC.

A conventional torque determination functionality does not consider the torque disturbances. It determines the desired motor toques MT, e.g. the desired restoring torques during reaction steering, without considering the torque disturbances TD. However, even when there are no operator-exerted torques OET from the operator 99, the actual torques exerted by the steering system 90 to the steering wheel 3 correspond to a combination of the motor torques MT exerted by the electric motor 6 and the torque disturbances TD exerted via the steering actuation converter 10. In a conventional steering system 90, due to the torque disturbances TD, the actual torque exerted by the steering system 90 to the steering wheel 3 (an "actual haptic steering feedback" AHF) can thus differ from a desired torque that should be exerted by the steering system 90 to the steering wheel 3 (a "desired haptic steering feedback" DHF). Due to unpredictable and/or non-stationary components of the torque disturbances TD, the actual steering feedback AHF can also flutter and show other undesired variations.

One approach would be to include a model of the expected torque disturbances TD in the torque determination functionality. However, in general the torque disturbances TD are unpredictable in detail and vary significantly depending on the configuration of the steering system 90 and the operational conditions such that this approach cannot accurately compensate for all torque disturbances TD in general.

In the disclosed steering control arrangement 1, the torque sensor 8 provides the information on the torque disturbances ITD. The motor controller 20 receives the information on the torque disturbances ITD and uses it to adjust the motor torques MT. This might include cases in which the motor controller 20 determines the motor torques MT with a conventional torque determination functionality and corrects the resulting motor torques MT based on the information on the torque disturbances ITD. It is also possible that the motor controller 20 considers the information on the torque disturbances ITD directly for calculating/determining the motor torques MT (it is noted that this covers calculating/determining the control data CD and/or the electric currents MC).

In particular, the motor controller 20 may determine the motor torques MT such that the torque disturbances TD (see Fig. 2) are compensated for, maybe at least partially compensated for.

Disregarding (comparatively small) resistances against rotation of the parts of the input assembly 2 at the steering-wheel side of the torque sensor 8 with the electric motor 6, e.g. due to friction and/or inertia, the following can apply: OET + MT + TD = 0. OET are the operator-exerted torques (see Fig. 2), MT are the motor torques, and TD are the torque disturbances. Since the motor controller 20 knows the motor torques MT (e.g. based on the electric motor currents MC) and has the information on the torque disturbances ITD, it can also estimate the operator-exerted toques OET.

However, the steering input sensor 40 may include an input torque sensor 40a that is arranged between the steering wheel 3 and the electric motor 6. The input torque sensor 40a detects relative torques between the steering wheel 3 and the electric motor 6. The steering input information SII includes corresponding input torque information. This allows for even more precise knowledge of the operator-exerted torques. Furthermore, the combination of the knowledge of the motor torques MT, the information on the torque disturbances ITD, and the input torque information allows for plausibility checks and/or to detect malfunctions.

"Active steering" may mean (include situations) when the operator 99 actively mechanically operates the input assembly (especially the steering wheel 3) for increasing the wheel direction angle of the steerable wheel(s) 96 away from the neutral wheel direction angle.

The motor controller 20 may be configured to determine whether active steering takes place at the moment or not and/or whether reaction steering takes place at the moment or not, e.g. based on the steering input information SII and/or the information on the torque disturbances ITD.

The steering control arrangement 1 can be configured to apply, during active steering, the motor torques MT for providing a resistance (damping) against increasing the wheel direction angle of the steerable wheel(s) 96 away from the neutral wheel direction again, i.e. against operator-exerted torques OET for turning the steering wheel 3 (further) away from its neutral position. The damping torque may increase with increasing movement speed of the steering wheel 3, with increasing vehicle speed, and/or with more pronounced wheel direction angle.

The desired damping torques may form part of the desired haptic steering feedback DHF. In active steering, the desired haptic steering feedback DHF can include both the desired restoring torques and the desired damping torques.

The steering control arrangement 1 can be configured such that the metering pump 12 is usable for manual pumping of the hydraulic fluid for actuating the steering cylinder 14 in emergency steering. This may apply if the hydraulic supply unit 15 fails and does not work or at least does not provide sufficient hydraulic pressure. Since the metering pump 12 is rotationally coupled to the steering wheel 3 (via the mechanic control interface 11 and the steering shaft 4), it can be driven by the operator 99 and/or by the electric motor 6.

During emergency steering and when the electric motor 6 is off, the torque sensor 8 can measure how much operator-exerted torque OET the operator 99 must exert (on the steering wheel 3) to rotate the metering pump 12. In other words, the information on the torque disturbances ITD in this situation is indicative on how much torque the operator 99 must exert to steer the vehicle 95. In emergency steering, the steering control arrangement 1 can optionally use the information on the torque disturbances ITD to support the operator 99 in pumping with the metering pump 12 by applying supporting motor torques MT with the electric motor 6 (i.e. in the same direction as the operator-exerted torques OET). The motor controller 20 may be configured for performing corresponding control of the electric motor 6. For example, the motor controller 20 may detect (e.g. based on the steering input data SID and/or the information on the torque disturbances ITD) that the operator 99 turns the steering wheel 3 and to which direction. The motor controller 20 further may apply supporting motor torques MT towards the same direction, e.g. when the information on the torque disturbances ITD indicates that the relative torque measured by the torque sensor 8 exceeds a certain threshold and/or such that the torque that must be exerted by the operator 99 is limited to a certain strength.

According to one aspect, the steering control arrangement 1 can include a closed-loop functionality 32 for controlling the motor torques MT with the information on the torque disturbances ITD, in other words a closed-loop control functionality 32 for controlling the motor torques MT using the torque sensor 8. It can be implemented in the motor controller 20.

The closed-loop functionality 32 may form part of the torque determining functionality and/or correct results of the torque determining functionality. Instructions 26 for performing the closed-loop functionality 32 may be stored, especially pre-stored, in the memory 24. The instructions 26 may include (consist of) corresponding code/algorithms.

The closed loop-functionality 32 is schematically shown in Fig. 2. It compensates (at least partly) for the torque disturbances TD. It can be configured for real-time compensation.

With the present invention, the motor torques MT are determined such the actual haptic steering feedback AHF matches the desired haptic steering feedback DHF. The actual haptic steering feedback AHF is no longer impaired by the torque disturbances TD, even if the torque disturbances TD are unpredictable. The risk that the operator 99 is surprised and maybe even confused by undesired variations of the actual haptic steering feedback AHF due to the torque disturbances TD is eliminated.

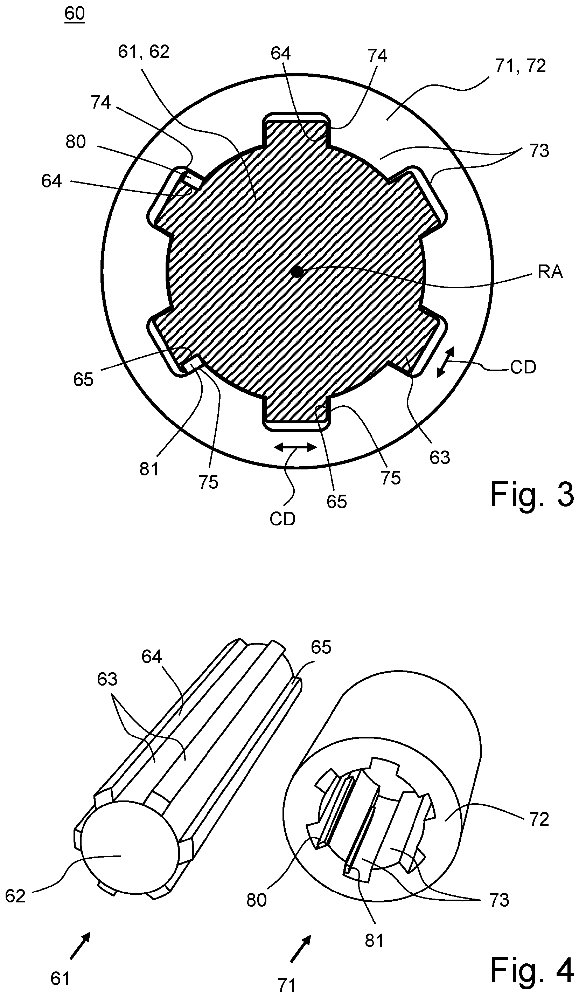

Fig. 3 shows a cross-sectional view of a spline joint 60 with a spline joint torque sensor. The spline joint torque sensor is implemented within the spline joint 60. The spline joint 60 is formed between a first joint member 61 and a second joint member 71.

The first joint member 61 includes a radially inner joint portion 62, e.g. shaft portion. Outer splines 63 are arranged at an outer circumferential surface of the inner joint portion 62. The inner joint portion 62 is rotatable around the rotational axis RA.

The second joint member 71 includes a radially outer joint portion 72, e.g. a sleeve portion. Inner splines 73 are arranged at an inner circumferential surface of the outer joint portion 72. The outer joint portion 72 is rotatable around the rotational axis RA as well.

The inner splines 73 at the outer joint portion 72 mechanically engage with the outer splines 63 at the inner joint portion 62.

The outer splines 63 include outer spline interface surfaces 64, 65 that are inclined with respect to a local circumferential direction CD (see at the bottom of Fig. 3), for example e.g. with an angle of at least 20°, for example with an angle of at least 70°. The outer spline interface surfaces 64, 65 can be (at least substantially) perpendicular to the local circumferential direction CD as shown in Figs. 3 and 4.

The inner splines 73 include inner spline interface surfaces 74, 75 that are inclined with respect to a local circumferential direction CD (see at the bottom of Fig. 3), for example e.g. with an angle of at least 20°, for example with an angle of at least 70°. The inner spline interface surfaces 74, 75 can be (at least substantially) perpendicular to the local circumferential direction CD as shown in Figs. 3 and 4.

Each of the inner spline interface surfaces 74, 75 is configured to engage with the respective adjacent outer spline interface surface 64, 65 and vice versa. This ensures the mechanic rotational coupling between the inner joint portion 62 and the outer joint portion 72.

The spline joint torque sensor includes a first pressure sensing element 80 and a second pressure sensing element 81. All pressure sensing elements 80, 81 are piezoelectric elements. Naturally, the spline torques sensor could include even more pressure sensing elements.

Fig. 4 shows a perspective view on the elements of the spline joint 60 in a disassembled state. It is noted that the second pressure sensing element 81 is attached to one of the inner spline interface surfaces 74, 75 at a position that is closer to a position of the first pressure sensing element 80 compared to Fig. 3 but this is irrelevant for the functionality and apart from that, Fig. 4 refers to the same spline joint 60 than Fig. 3.

Without loss of generality, in Fig. 3, a clockwise rotation of the inner joint portion 62 with respect to the outer joint portion 72 may be referred to as first relative rotational direction. A counterclockwise rotation of the inner joint portion 62 relative to the outer joint portion 72 may be referred to as an opposite second relative rotational direction.

In Fig. 3, the inner spline interface surfaces 74 engage with the outer spline interface surfaces 64 for entraining the outer joint portion 72 to clockwise rotation of the inner joint portion 62. The inner spline interface surfaces 75 engage with the outer spline interface surfaces 65 for entraining the outer joint portion 72 to counterclockwise rotation of the inner joint portion 62.

The first pressure sensing element 80 is arranged between one of the outer spline interface surfaces 64 and the most adjacent inner spline interface surface 74. It is evident that clockwise rotation/displacement of the inner joint portion 62 relative to the outer joint portion 72 compresses the first pressure sensing element 80 between this outer spline interface surface 64 and this adjacent inner spline interface surface 74. This occurs if the outer joint portion 72 exhibits any resistance against being rotated clockwise along with the inner joint portion 62. The clockwise relative rotational rotation/displacement of the inner joint portion 62 relative to the outer joint portion 72 increases until compressive forces on the first pressure sensing element 80 and maybe between some or all pairs of respective adjacent outer spline interface surfaces 64 and inner spline interface surfaces 74 overcome the resistance. Finally, a quasi-stationary state is reached in which the outer joint portion 72 rotates in unison with the inner joint portion 62 clockwise. In this state, the total compressive forces (on the first pressure sensing element 80 and maybe between some or all pairs of respective adjacent outer spline interface surfaces 64 and inner spline interface surfaces 74) balance out the resistance. The compression of the pressure sensing element 80 is indicative of the torque that is transferred from the inner joint portion 62 to the outer joint portion 72 for entraining the outer joint portion 72 to follow clockwise rotation of the inner joint portion 62.

Similarly, it is evident that counterclockwise rotation/displacement of the inner joint portion 62 relative to the outer joint portion 72 compresses the second pressure sensing element 81. The compression of the pressure sensing element 80 is indicative of the torque that is transferred from the inner joint portion 62 to the outer joint portion 72 for entraining the outer joint portion 72 to follow counterclockwise rotation of the inner joint portion 62.

If the pressure sensing element 80 is pre-compressed in an idle state (no torque transfer and if the construction of the spline joint allows some minimal displacement of the adjacent inner spline interface surface 74 away from the corresponding outer spline interface surface 64 (e.g. due to some slightly compressible elements between the spline interface surfaces 65, 75), the single pressure sensing element 80 can be sufficient to measure torque transfers along both the first and second relative rotational directions.

The spline joint torque sensor shown in Fig. 3 can be, for example, used as the torque sensor 8 in Figs. 1 and 2. In Fig. 1, the first joint member 61 could be part 4b of the steering shaft 4 and the second joint member 71 could be the part 4c of the steering shaft 4 (or vice versa). If the torque sensor 8 is provided between the second end of the steering shaft 4 and the mechanic control interface 11 (not shown), the spline joint 60 shown in Fig. 3 could be formed between said second end of the steering shaft 4 and the mechanic control interface 11. In other words, the second end of the steering shaft 4 could correspond to the first joint member 61 and the mechanic control interface 11 could be correspond to the second joint member 71 (or vice versa). These are only non-limiting examples. Additionally or alternatively, the input torque sensor 40a could be implement as the spline torque sensor.

The spline joint torque sensor allows for measuring torque transfer between the first joint member 61 and the second joint member 71 with high precision and without significant deadband. Only an extremely small relative rotational displacement between the first joint member 61 and the second joint member 71 is needed to get a signal indicating the torque transfer. The spline joint torque sensor is hence highly responsive.

### List of reference signs:

- 1: steering control arrangement
- 2: (steering) input assembly
- 3: steering wheel
- 4: steering shaft
- 4a, 4b, 4c: part
- 5: steering column
- 6: electric motor
- 7: rotor
- 8: torque sensor
- 10: steering actuation converter
- 11: mechanic control interface
- 12: metering pump
- 13: electrohydraulic valve assembly
- 14: steering cylinder
- 14a, 14b: fluid connections
- 15: hydraulic supply unit
- 16: fluid supply line
- 17: fluid return line
- 20: motor controller
- 21: processor
- 22: current output unit
- 23: control data
- 24: memory
- 25, 26: instructions
- 27, 28, 29, 30: interface
- 31: output
- 32: closed-loop control functionality
- 40: steering input sensor
- 40a: input torque sensor
- 41: vehicle speed sensor
- 42: wheel direction angle sensor
- 60: spline joint
- 61: first joint member
- 62: inner joint portion
- 63: outer splines
- 64, 65: outer spline interaction surfaces
- 71: second joint member
- 72: outer joint portion
- 73: inner splines
- 74, 75: inner spline interaction surfaces
- 80, 81: pressure sensing element
- 90: steering system
- 95: vehicle
- 96: steerable wheel
- 99: operator
- CD: local circumferential direction
- ITD: information on torque disturbances
- LA: longitudinal axis
- MC: electric motor currents
- MT: motor torques
- MSC: mechanic steering commands
- RA: rotational axis
- SII: steering input information
- TD: torque disturbances
- OET: operator-exerted torques
- VSI: vehicle speed information
- WAI: wheel direction angle information

## Claims

1. A steering control arrangement (1) for a steering system (90) for a vehicle (95), wherein the steering control arrangement (1) comprises:
an input assembly (2) for receiving operator-exerted torques (OET) for mechanic steering commands (MSC);
an electric motor (6) that is mechanically coupled to the input assembly (2) for at least applying motor torques (MT) to the input assembly (2); and
a steering actuation converter (10) for converting the mechanic steering commands (MSC) into mechanic, hydraulic, and/or electric actuation for the steering system (90), wherein a mechanic control interface (11) of the steering actuation converter (10) is mechanically coupled with respect to the input assembly (2) to mechanically receive the mechanic steering commands (MSC);
**characterized in that** a torque sensor (8) is arranged functionally between the electric motor (6) and the steering actuation converter (10).

2. The steering control arrangement (1) according to claim 1, wherein the input assembly (2) includes a steering shaft (4),
wherein a rotor (7) of the electric motor (6) is mechanically coupled to the steering shaft (4) for applying the motor torques (MT) to the steering shaft (4) and/or wherein the rotor (7) of the electric motor (7) forms part of the steering shaft (3).

3. The steering control assembly (1) according to claim 2, wherein the steering shaft (4) and the mechanic control interface (11) of the steering actuation converter (10) are directly mechanically rotationally coupled.

4. The steering control arrangement (1) according to any one of the preceding claims, wherein the steering control arrangement (1) is capable of producing haptic steering feedback (AHF) for an operator (99) with applying the motor torques (MT) to the input assembly (2).

5. The steering control arrangement (1) according to any one of the preceding claims, wherein the torque sensor (8) is configured to detect relative torques between the mechanic control interface (11) of the steering actuation converter (10) and the input assembly (2) being drivable by the electric motor (6).

6. The steering control arrangement (1) according to any one of the preceding claims, wherein the steering control arrangement (1) comprises a controller (20) for controlling the electric motor (6), wherein the controller (20) is operatively connected with the torque sensor (8) and configured to use information (ITD) from the torque sensor (8) for controlling the motor torques (MT) applied by the electric motor (MT).

7. The steering control arrangement (1) according to claims 4 to 6, wherein the controller (20) is configured to use the information (ITD) from the torque sensor (8) to compensate, at least partly, for the relative torques in controlling the motor torques (MT) for providing the haptic steering feedback (AHF).

8. The steering control arrangement (1) according to claim 7, wherein the controller (20) is configured to perform a closed-loop control (32) to compensate, at least party, for the relative torques in controlling the motor torques (MT) for providing the haptic steering feedback (AHF).

9. The steering control arrangement (1) according to any one of the claims 6 to 8, wherein the controller (20) is configured to receive vehicle speed information (VSI) and to determine the motor torques (MT) considering the vehicle speed information (VSI).

10. The steering control arrangement (1) according to any one of the claims 6 to 9, wherein the controller (20) is configured to receive wheel direction angle information (WAI) and to determine the motor torques (NT) considering the wheel direction angle information (WAI).

11. The steering control arrangement (1) according to any one of the claims 6 to 10, wherein the controller (20) is configured to receive mechanic steering input information (SII) and to determine the motor torques (MT) considering the mechanic steering input information (SII).

12. The steering control arrangement (1) according to any one of the preceding claims, wherein the steering actuation converter (10) includes a rotary meter (12) that is mechanically rotationally coupled to the mechanic control interface (11).

13. The steering control arrangement (1) according to any one of the preceding claims, wherein the torque sensor (8) comprises at least one pressure sensing element (80, 81) that is arranged within a spline joint (60).

14. The steering control arrangement (1) according to any one of the preceding claims, wherein the at least one pressure sensing element (80, 81) includes a piezoelectric element.

15. A steering system (90) for a vehicle (95), the steering system (90) including the steering control arrangement (1) according to any one of the preceding claims.

16. The steering system (90) according to claim 15, wherein the steering system (90) is a hydraulic steering system and comprises at least one steering cylinder (14) that is hydraulically coupled to the steering actuation converter (10), wherein the steering actuation converter (10) includes a hydraulic steering unit for hydraulically operating the at least one steering cylinder (14).

## Amended claims

### Amended claims in accordance with Rule 137(2) EPC.

1. A steering control arrangement (1) for a steering system (90) for a vehicle (95), wherein the steering control arrangement (1) comprises:
an input assembly (2) for receiving operator-exerted torques (OET), exerted to a steering wheel (3), for mechanic steering commands (MSC);
an electric motor (6) that is mechanically coupled to the input assembly (2) for at least applying motor torques (MT) to the input assembly (2), wherein the steering control arrangement (1) is capable of producing haptic steering feedback (AHF) for an operator (99) with applying the motor torques (MT) to the input assembly (2); and
a steering actuation converter (10) for converting the mechanic steering commands (MSC) into hydraulic actuation for the steering system (90), wherein a mechanic control interface (11) of the steering actuation converter (10) is mechanically coupled with respect to the input assembly (2) to mechanically receive the mechanic steering commands (MSC);
wherein the steering actuation converter (10) includes a hydraulic steering unit allowing for hydrostatic steering,
**characterized in that** a torque sensor (8) is arranged functionally between the electric motor (6) and the steering actuation converter (10),
wherein the hydraulic steering unit comprises a metering pump (12) that is mechanically rotationally coupled to the mechanic control interface (11),
wherein the torque sensor (8) is configured to detect relative torques between the mechanic control interface (11) of the steering actuation converter (10) and the input assembly (2) being drivable by the electric motor (6) and to provide information on torque disturbances (ITD) that are exerted by the steering actuation converter (10) with respect to the input assembly (3) with the electric motor (6), wherein the steering control arrangement (1) is configured to use the information on the torque disturbances (ITD) to compensate, at least partly, for the torque disturbances (TD), in particular for adapting the motor torque (MT) in order to compensate, at least partly, for the torque disturbances (TD) to match the actual haptic steering feedback (AHF) at the input assembly (2) better to a desired haptic steering feedback (DHF), wherein the desired haptic steering feedback (DHF) consists of a desired restoring torque for rotating the steering wheel (3) back to a neutral position.

2. The steering control arrangement (1) according to claim 1, wherein the input assembly (2) includes a steering shaft (4),
wherein a rotor (7) of the electric motor (6) is mechanically coupled to the steering shaft (4) for applying the motor torques (MT) to the steering shaft (4) and/or wherein the rotor (7) of the electric motor (7) forms part of the steering shaft (3).

3. The steering control assembly (1) according to claim 2, wherein the steering shaft (4) and the mechanic control interface (11) of the steering actuation converter (10) are directly mechanically rotationally coupled.

4. The steering control arrangement (1) according to any one of the preceding claims, wherein the steering control arrangement (1) comprises a controller (20) for controlling the electric motor (6), wherein the controller (20) is operatively connected with the torque sensor (8) and configured to use information (ITD) from the torque sensor (8) for controlling the motor torques (MT) applied by the electric motor (MT).

5. The steering control arrangement (1) according to claim 4, wherein the controller (20) is configured to perform a closed-loop control (32) to compensate, at least party, for the relative torques in controlling the motor torques (MT) for providing the haptic steering feedback (AHF).

6. The steering control arrangement (1) according to claim 4 or 5, wherein the controller (20) is configured to receive vehicle speed information (VSI) and to determine the motor torques (MT) considering the vehicle speed information (VSI).

7. The steering control arrangement (1) according to any one of the claims 4 to 6, wherein the controller (20) is configured to receive wheel direction angle information (WAI) and to determine the motor torques (MT) considering the wheel direction angle information (WAI).

8. The steering control arrangement (1) according to any one of the claims 4 to 7, wherein the controller (20) is configured to receive mechanic steering input information (SII) and to determine the motor torques (MT) considering the mechanic steering input information (SII).

9. The steering control arrangement (1) according to any one of the preceding claims, wherein the hydraulic steering unit further includes an electrohydraulic valve assembly (13).

10. The steering control arrangement (1) according to claims 8 and 9, wherein the motor controller (20) is configured to operate the electrohydraulic valve assembly (13) based on the steering input data (SII) and to consider also at least the information on the torque disturbances (ITD) for controlling the electrohydraulic valve assembly (13).

11. The steering control arrangement (1) according to any one of the preceding claims. wherein the steering control arrangement (1) allows for emergency steering with manual pumping of hydraulic fluid with the metering pump (12) by operating the steering wheel (3).

12. The steering control arrangement (1) according to any one of the preceding claims, wherein the torque sensor (8) comprises at least one pressure sensing element (80, 81) that is arranged within a spline joint (60).

13. The steering control arrangement (1) according to claim 12 or 13, wherein the spline joint (60) is formed between a first joint member (61) and a second joint member (71), wherein the first joint member (61) includes a radially inner joint portion (62) that is rotatable around a rotational axis (RA), wherein outer splines (63) are arranged at an outer circumferential surface of the inner joint portion (62), and wherein the second joint member (71) includes a radially outer joint portion (72), wherein inner splines (73) are arranged at an inner circumferential surface of the outer joint portion (72).

14. The steering control arrangement (1) according to claim 12 or 13, wherein the at least one pressure sensing element (80, 81) includes a piezoelectric element.

15. The steering control arrangement (1) according to any one of the claims 12 to 14, wherein the torque sensor (8) arranged within the spline joint (60) includes more than two pressure sensing elements (80, 81).

16. A steering system (90) for a vehicle (95), the steering system (90) including the steering control arrangement (1) according to any one of the preceding claims.

17. The steering system (90) according to claim 16, wherein the steering system (90) is a hydraulic steering system and comprises at least one steering cylinder (14) that is hydraulically coupled to the steering actuation converter (10), wherein the hydraulic steering unit is configured for hydraulically operating the at least one steering cylinder (14).
